# EUROPÄISCHE PATENTSCHRIFT

(11) **EP 3 148 726 B1**
(45) Veröffentlichungstag und Bekanntmachung des Hinweises auf die Patenterteilung: **17.02.2021**
(21) Anmeldenummer: 15732517.6
(22) Anmeldetag: 13.04.2015
(51) Int. Cl.: B21K 25/00, B21J 15/04, F16B 17/00, F16C 11/06

(54) **VERFAHREN ZUR HERSTELLUNG EINER NIETVERBINDUNG ZWISCHEN EINEM KUGELGELENKBOLZEN UND EINEM BLECHFÖRMIGEN BAUTEIL**
METHOD FOR PRODUCING A RIVETED CONNECTION BETWEEN A BALL JOINT PIN AND A COMPONENT IN THE FORM OF A METAL SHEET
PROCÉDÉ DE RÉALISATION D'UN ASSEMBLAGE RIVETÉ ENTRE UN AXE D'ARTICULATION À ROTULE ET UN ÉLÉMENT EN FORME DE TÔLE

(30) Priorität: 27.05.2014 DE 102014107462; 18.07.2014 DE 102014110139
(43) Veröffentlichungstag der Anmeldung: 05.04.2017
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB
(86) Internationale Anmeldenummer: PCT/DE2015/100155
(87) Internationale Veröffentlichungsnummer: WO 2015/180708

(56) Entgegenhaltungen:
- EP-A2- 1 852 212
- EP-A2- 2 039 947
- WO-A1-2007/102416
- DE-A1-102012 201 298
- FR-A- 1 327 427
- JP-A- 2000 210 737
- JP-A- 2009 275 715

## Beschreibung

Die Erfindung betrifft ein Verfahren zur Herstellung einer Nietverbindung zwischen einem Kugelgelenkbolzen und einem blechförmigen Bauteil gemäß dem Oberbegriff des Patentanspruches 1.

Kugelgelenkbolzen finden in unterschiedlichsten Bereichen zur Herstellung von Scharniergelenkmechaniken, insbesondere eines Gelenkpunktes oder einer Gelenkaufhängung Verwendung. Beispielsweise im Automobilbereich werden diese für Scharniergelenkmechaniken von Heck- und Frontklappen eingesetzt. Eine beispielhafte Anordnung aus einem Kugelgelenkbolzen und einem Bauteil ist aus der FR 1 327 427 A bekannt.

Auch ist es bereits bekannt, zur Reduzierung der Arbeitsvorgänge bei der Serienfertigung von Produkten, insbesondere im Automobilbereich vorgefertigte Baugruppen zu verwenden, und zwar beispielsweise eine vorgefertigte Baugruppe umfassend ein blechartiges Bauteil und zumindest einen darauf vormontierten Kugelgelenkbolzen zum Aufbau einer Scharniergelenkmechanik.

Bekannte Kugelgelenkbolzen weisen zumindest einen Kugelkopfabschnitt und einen daran anschließenden Schaftabschnitt auf, an den sich abhängig vom Anwendungsfall unterschiedliche Bolzenabschnitte, insbesondere ein Verbindungsabschnitt zur Herstellung einer Verbindung mit einem blechförmigen Bauteil anschließen.

Beispielsweise kann der Kugelgelenkbolzen zur Herstellung einer Nietverbindung mit einem blechartigen Bauteil einen an den Schaftabschnitt anschließenden zylinderförmigen Nietabschnitt aufweisen, der zur Herstellung einer Nietverbindung mit dem blechförmigen Bauteil, insbesondere Metallblech partiell umlaufend durch Taumeln verformt wird, und zwar so lange bis der durch ein Vollmaterial gebildete Nietabschnitt mit dem Metallblech in Kontakt steht. Zur Kaltverformung des durch ein Vollmaterial gebildeten Nietabschnittes beim Taumeln sind hohe Umformkräfte erforderlich, um die notwendigen hohen Umformgrade zu erreichen. Eine durch Taumeln hergestellte Nietverbindung zwischen einem Kugelgelenkbolzen und einem Metallblech weist eine hohe Verbindungsstärke auf und ist zur Übertragung hoher Kräfte geeignet. Nachteilig können aufgrund der erforderlichen hohen Umformkräfte Risse im Kugelgelenkbolzen und damit potentielle Bruchstellen entstehen.

Alternativ hierzu ist die Herstellung einer festen Verbindung zwischen dem Kugelgelenkbolzen und einem Bauteil, vorzugsweise einem Metallblech mittels Schweißen denkbar. Über eine derartige stoffschlüssige Verbindung können ebenfalls hohe Kräfte übertragen werden. Nachteilig sind derartige Schweißverfahren nicht für alle Materialien geeignet und erfordern aufwendige Verarbeitungsprozesse. Ein gattungsgemäßes Verfahren, sowie eine beispielhafte mittels Verschweißen hergestellte Kugelgelenkverbindung ist in der JP 2009 275715 A beschrieben.

Herkömmliche Kugelgelenkbolzen können auch einen an den Schaftabschnitt anschließenden Tellerabschnitt aufweisen, an den sich ein zylinderförmiger, aus einem Vollmaterial hergestellter Verbindungsabschnitt anschließt, der ein Außengewinde aufweist. Der Kugelgelenkbolzen wird mit seinem zylinderförmigen Verbindungsabschnitt durch eine Montageöffnung im blechartigen Bauteil, insbesondere Metallblech geführt, und zwar bis der Tellerabschnitt zur Anlage mit dem blechartigen Bauteil gelangt. Anschließend wird ein Mutterelement auf das Außengewinde aufgeschraubt und damit der Kugelgelenkbolzen am blechartigen Bauteil fixiert. Eine derartige Schraubverbindung ist zwar in der Lage, hohe Kräfte zu übertragen, allerdings ist die Umsetzung in der Serienproduktion aufgrund einer Vielzahl an Montageschritten technisch aufwendig und daher nicht wirtschaftlich.

Den vorgenannten Verbindungstechnologien ist daher gemein, dass jeweils ein separater, dem Herstellungsprozess des blechartigen Bauteils nachgeschalteter Arbeitsvorgang zur Montage des Kugelgelenkbolzens an dem blechartigen Bauteil, insbesondere Metallblech erforderlich ist. Nachteilig entsteht hierdurch ein hoher Montageaufwand, der mit hohen Kosten verbunden ist. Demgemäß wäre es wünschenswert die Herstellung der Nietverbindung zwischen dem Kugelgelenkbolzen und dem zumindest abschnittsweise blechförmigen Bauteil in den Herstellungsprozess des blechartigen Bauteils zu integrieren, um nachgeschaltete Arbeitsvorgänge zu vermeiden.

Aus der DE 10 2009 037 427 A1 ist bereits ein Verfahren zur Herstellung einer Nietverbindung zwischen einem Funktionselement und einem Blechteil bekannt, bei dem das Blechteil durch einen hohlzylinderförmigen Nietabschnitt des Funktionselementes bei gleichzeitiger Abstützung auf einer Matrize durchlocht wird und durch die Matrize ein Nietbördel erzeugt wird. Vor Fertigstellung des Nietbördels wird das Funktionselement weiter nach unten gedrückt und damit einen dem Schafteil zugewandter Bereich des hohlzylinderförmigen Nietabschnittes zu einem Ringfalz ausgebildet, der auf der dem Nietbördel angewandten und dem Schafteil zugewandten Seite des Blechteils anliegt. Hierdurch wird der die Durchlochung umgebende Anlageabschnitt des Blechteils derart verformt, dass dieser den Ringfalz nahezu bündig aufnimmt, d.h. der Ringfalz wird im Blechteil versenkt. Nachteilig steht eine derartige Nietverbindung durch das Versenken des Ringfalzes im Blechteil von der Unterseite des Blechteils weiter ab und führt zu einer Schwächung des Blechteils im Verbindungsbereich.

Ausgehend von dem voranstehend genannten Stand der Technik liegt der Erfindung die Aufgabe zugrunde, ein Verfahren zur Herstellung einer Nietverbindung zwischen einem Kugelgelenkbolzen und einem blechförmigen Bauteil sowie einen zugehörige vorgefertigte Baugruppe aus einem Kugelgelenkbolzen und einem blechförmigen Bauteil anzugeben, welche die zuvor genannten Nachteile beseitigt, und insbesondere eine einfache, schnelle und kostengünstige Herstellung vorgefertigter Baugruppen umfassend das Blechteil mit bereits montierten Kugelgelenkbolzen in einem Herstellungsprozess ermöglicht. Die Aufgabe wird durch ein Verfahren zur Herstellung einer Nietverbindung zwischen einem Kugelgelenkbolzen und einem blechförmigen Bauteil gemäß dem Patentanspruch 1 gelöst.

Der wesentliche Aspekt des erfindungsgemäßen Verfahrens ist darin zu sehen, dass der Kugelgelenkbolzen in einem ersten Schritt mittels eines Fügewerkzeuges derart in die Vorlochung gefügt wird, dass der Tellerabschnitt sich mit seiner Unterseite zumindest abschnittsweise vorzugsweise flächig auf dem Anlageabschnitt des blechförmigen Bauteils abstützt, und dass in einem zweiten Schritt der zumindest abschnittsweise hohlzylinderförmige Nietbundabschnitt mittels eines matrizenförmigen Formwerkzeuges in Form eines Nietstempels zur Herstellung der Nietverbindung gesteuert in Richtung des blechförmigen Bauteils verformt wird. Beim erfindungsgemäßen Verfahren erfolgt das Vernieten des Kugelgelenkbolzens mit dem blechförmigen Bauteil bereits im Umformwerkzeug, d.h. direkt bei der Herstellung des blechförmigen Bauteils. Nachgeschaltete Arbeitsgänge entfallen und ein hohes Kosteneinsparungspotential entsteht. Hierbei wird eine Aufweitung der Vorlochung beim Nietprozess vermieden.

Dabei wird über den Nietstempel eine Formkraft in den Nietbundabschnitt, insbesondere in dessen Hohlanteil sowie über das Fügewerkzeug zumindest im Bereich der Oberseite des Tellerabschnittes und/oder im Bereich des Kugelkopfabschnittes eine Anlagekraft in den Kugelgelenkbolzen gesteuert eingeleitet. Vorzugsweise wird der Betrag der eingeleiteten Formkraft über eine mit dem Nietstempel in Wirkverbindung stehende Federeinheit, vorzugsweise eine Gasdruckfedereinheit gesteuert. Alternativ oder zusätzlich wird der Betrag der eingeleiteten Anlagekraft über eine mit dem Fügewerkzeug in Wirkverbindung stehende Federeinheit, vorzugsweise eine Gasdruckfedereinheit gesteuert.

In einer vorteilhaften Ausführungsvariante wird der einen Hohlanteil und einen Vollanteil aufweisende Nietbundabschnitt im Bereich des Hohlanteils derart ohne Rollen verformt, dass zwischen dem blechförmigen Bauteil und den verformten Abschnitten des Hohlanteils des Nietbundabschnittes weiterhin ein Luftspalt besteht und/oder die freien Enden des Nietbundabschnittes vom blechförmigen Bauteil weg nach außen orientiert sind. Der Hohlanteil wird besonders bevorzugt hierzu um bis zu 90°, vorzugsweise zwischen 80° und 90° bezogen auf die Bolzenlängsachse nach außen verformt.

Erfindungsgemäß wird im zweiten Schritt des erfindungsgemäßen Verfahrens der Hohlanteil des Nietbundabschnittes vorgebördelt und anschließenden mittels eines geeigneten Verarbeitungswerkzeuges nachgeschlagen.

Insbesondere bei blechförmigen Bauteilen, insbesondere Metallblechen mit einer geringen Blechstärke kann in einer vorteilhaften Ausführungsvariante des erfindungsgemäßen Verfahrens diese im Bereich des Anlageabschnittes durch Umbördeln oder durch Einbringen eines Verstärkungselementes verstärkt werden.

Nach dem erfindungsgemäßen Verfahren kann eine vorgefertigte Baugruppe hergestellt werden. Diese umfasst zumindest einen Kugelgelenkbolzen und ein blechförmiges Bauteil mit einem eine Vorlochung umgebenden Anlageabschnitt, bei der der Kugelgelenkbolzen zumindest einen Kugelkopfabschnitt, einen daran anschließenden Schaftabschnitt, einen eine Ober- und Unterseite aufweisenden ebenen Tellerabschnitt und einen Nietbundabschnitt aufweist, wobei der Kugelgelenkbolzen mit dem Bauteil durch Verformen des Nietbundabschnittes verbunden ist. Besonders vorteilhaft ist der Nietbundabschnitt zumindest abschnittsweise hohlzylinderförmig ausgebildet, und zwar weist dieser einen Hohlanteil und einen daran anschließenden Vollanteil auf. Vorteilhaft ist dadurch ein Vernieten mit geringeren Formkräften möglich, so dass das Entstehen von Mikrorissen im Schaftbereich des Kugelgelenkbolzens beim Einbringen in das blechförmige Bauteil effektiv verhindert werden kann. Hierbei liegt die Unterseite des Tellerabschnittes auf dem Anlageabschnitt des blechförmigen Bauteils vorzugsweise flächig auf.

Vorzugsweise ist hierzu der Kugelgelenkbolzen derart in die Vorlochung gefügt, dass der Tellerabschnitt sich mit seiner Unterseite auf dem Anlageabschnitt des blechförmigen Bauteils zumindest abschnittsweise abstützt. Der zumindest abschnittsweise hohlzylinderförmige Nietbundabschnitt ist in Richtung des blechförmigen Bauteils verformt, und zwar derart, dass der Hohlanteil um bis zu 90°, vorzugsweise zwischen 80° und 90° bezogen auf die Bolzenlängsachse nach außen weist.

In einer bevorzugten Ausführungsvariante sind der Schaftabschnitt des Kugelgelenkbolzens kegelförmig und/oder der Tellerabschnitt scheibenförmig ausgebildet. Hierdurch ergibt sich eine ebenfalls optimierte Kraftverteilung beim Fügen und Nieten des Kugelgelenkbolzens.

Weiterhin vorteilhaft ist ein Außendurchmesser des Nietbundabschnittes kleiner als der größte Durchmesser des Schaftabschnittes oder kleiner oder gleich dem Kugeldurchmesser des Kugelkopfabschnittes. Damit kann die Vorlochung geringer dimensioniert werden, was insbesondere blechförmigen Bauteilen mit einer geringeren Blechstärke zu einer Erhöhung der Stabilität des blechförmigen Bauteils führt.

Die Längserstreckung des Vollanteils des Nietbundabschnittes entspricht näherungsweise der Blechstärke des blechförmigen Bauteils, wobei die Wandstärke des Nietbundabschnittes im Bereich des Hohlanteils zwischen 0,5 mm und 2,5 mm beträgt.

Die Ausdrucke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Seitenansicht eines Kugelgelenkbolzens,
- Fig. 2: einen Längsschnitt durch einen Kugelgelenkbolzen,
- Fig. 3: eine schematische Schnittdarstellung durch einen im Fügewerkzeug aufgenommen und mit dem blechförmigen Bauteil durch Fügen verbundenen Kugelgelenkbolzen,
- Fig. 4: eine schematische Schnittdarstellung der Anordnung aus Kugelgelenkbolzen und blechförmigen Bauteil gemäß Figur 3 nach dem Vernieten,
- Fig. 5: eine schematische Schnittdarstellung durch einen in einem alternativen Fügewerkzeug aufgenommen und mit dem blechförmigen Bauteil durch Fügen verbundenen Kugelgelenkbolzen,
- Fig. 6: eine schematische Schnittdarstellung der Anordnung aus Kugelgelenkbolzen und blechförmigen Bauteil gemäß Figur 5 nach dem Vernieten,
- Fig. 7: eine schematische Schnittdarstellung durch eine alternative Anordnung aus Kugelgelenkbolzen und blechförmigen Bauteil nach dem Vernieten,
- Fig. 8: eine schematische Schnittdarstellung durch eine erfindungsgemäß hergestellte Nietverbindung zwischen einem Kugelgelenkbolzen und einem blechförmigen Bauteil nach einer Nachbehandlung eines vorgebördelten Nietabschnittes mittels Nachschlagen,
- Fig. 9: eine schematische Schnittdarstellung durch eine erfindungsgemäß hergestellte Nietverbindung zwischen einem Kugelgelenkbolzen und einem blechförmigen Bauteil mit verstärktem Anlageabschnitten und
- Fig. 10: eine schematische Schnittdarstellung durch eine erfindungsgemäß hergestellte Nietverbindung zwischen einem Kugelgelenkbolzen und einem blechförmigen Bauteil mit Verstärkungselement.

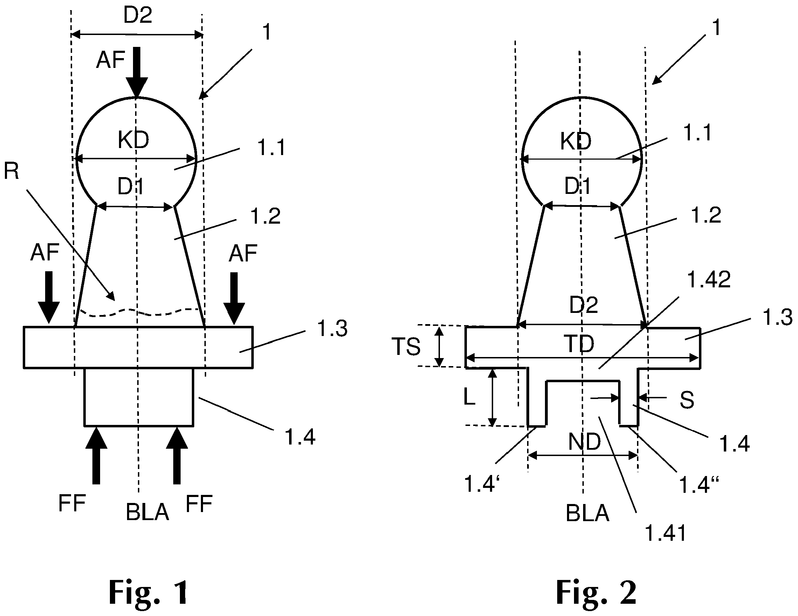

In der Figur 1 ist beispielhaft ein Kugelgelenkbolzen 1 dargestellt, der vorzugsweise einstückig ausgebildet ist. Der Kugelgelenkbolzen 1 ist beispielsweise aus Metall oder einer Metalllegierung hergestellt.

Der Kugelgelenkbolzen 1 erstreckt sich entlang einer Bolzenlängsachse BLA und weist zumindest einen Kugelkopfabschnitt 1.1, einen daran anschließenden Schaftabschnitt 1.2 gefolgt von einem eine Ober- und Unterseite aufweisenden ebenen Tellerabschnitt 1.3 und sich entlang der Bolzenlängsachse BLA anschließenden zumindest abschnittsweise hohlzylinderförmigen Nietbundabschnitt 1.4 auf. Der Nietbundabschnitt 1.4 weist in einer bevorzugten Ausführungsvariante einen Hohlanteil 1.41 und einen Vollanteil 1.42 auf. Figur 2 zeigt einen schematischen Längsschnitt durch den Kugelgelenkbolzen 1.

Der Schaftabschnitt 1.2 ist vorzugweise kegelförmig ausgebildet, d.h. der Querschnitt des Schaftabschnittes 1.2 ist kreisförmig mit einem entlang der Bolzenlängsachse BLA zunehmenden Durchmesser D, und zwar nimmt der Durchmesser D ausgehend von einem ersten Durchmesser D1 am Kugelkopfabschnitt 1.1 entlang der Bolzenlängsachse BLA bis zu einem zweiten Durchmesser D2 am Tellerabschnitt 1.3 zu. In einer Ausführungsvariante entspricht der zweite Durchmesser D2 im Bereich des Tellerabschnittes 1.3 näherungsweise dem Kugeldurchmesser KD des Kugelkopfabschnittes 1.1 oder ist größer als dieser ausgebildet ist. Beispielsweise kann der zweite Durchmesser D2 des Schaftabschnittes 1.2 im Bereich des Tellerabschnittes 1.3 vom Einfachen bis zum 1,2-fachen des Kugeldurchmessers KD des Kugelkopfabschnittes 1.1 betragen. Der erste Durchmesser D1 beträgt beispielsweise zwischen 0,5 mm und 1,4 mm und der zweite Durchmesser D2 zwischen 0,8 mm und 1,4 mm. Vorzugsweise ist ein Kugeldurchmesser KD von 0,8 mm bis 1,2 mm vorgesehen. Die Abmessungen des Kugelkopfabschnittes 1.1, insbesondere dessen Kugeldurchmesser KD sind weitestgehend standardisiert und damit festgelegt.

Der Tellerabschnitt 1.3 ist scheibenförmig ausgebildet, so dass die Ober- und Unterseite des Tellerabschnittes 1.3 parallel zueinander verlaufen und jeweils eine den Schaftabschnitt 1.2 bzw. den Nietabschnitt 1.4 ringförmig umgebende Fläche bzw. Anlagefläche bilden. Die Ober- und Unterseite verlaufen jeweils in einer senkrecht zur Bolzenlängsachse BLA verlaufenden Ebene. Der Tellerdurchmesser TD des Tellerabschnittes 1.3 beträgt beispielsweise zwischen dem 1,5-fachen und 2-fachen des Kugeldurchmessers KD, vorzugsweise zwischen 1,2 mm und 2,5 mm. Die Tellerstärke TS des Tellerabschnittes 1.3 entlang der Bolzenlängsachse BLA beträgt beispielsweise 1,5mm bis 5,0 mm.

Der zumindest abschnittsweise hohlzylinderförmige Nietbundabschnitt 1.4 weist vorzugsweise einen Außendurchmesser ND kleiner als der zweite Durchmesser D2 des Schaftabschnittes 1.2 auf. Der Hohlanteil 1.41 des Nietbundabschnittes 1.4 erstreckt sich beispielsweise zumindest über die vom Tellerabschnitt 1.3 abgewandte halbe Länge L des Nietbundabschnittes 1.4, d.h. der Nietbundabschnitt 1.4 weist zumindest einen Halbhohlanteil auf. Die Länge L ist hierbei abhängig von Blechstärke BS des blechförmigen Bauteils 2. Die Blechstärke BS beträgt beispielsweise zwischen 0,7 mm und 5,0 mm.

Die Wandstärke S des Nietbundabschnittes 1.4 im Bereich des Hohlanteils 1.41 beträgt zwischen 0,5 mm und 2,5 mm. Hierbei verläuft der hohlzylinderförmige Nietbundabschnitt 1.4 konzentrisch zur Bolzenlängsachse BLA. Beispielsweise erstreckt sich der Hohlanteil 1.41 bis zu 2/3 der Länge L und der verbleibende Vollanteil 1.42 des Nietbundabschnittes 1.4 beträgt mindestens 1/3 der Länge L. In einer vorteilhaften Ausführungsvariante entspricht die Längserstreckung des Vollanteils 1.42 des Nietbundabschnittes 1.4 näherungsweise der Blechstärke BS des blechförmigen Bauteils 2, mit dem die Nietverbindung hergestellt werden soll. Besonders bevorzugt ist Längserstreckung des Vollanteils 1.42 kleiner oder gleich der Summe aus der Wandstärke S des Nietbundabschnittes 1.4 im Bereich des Hohlanteils 1.41 und der Blechstärke BS abzüglich der Höhe eines matrizenartigen Formwerkzeuges, insbesondere eines Nietstempels 4.

Das erfindungsgemäße Verfahren betrifft die Herstellung von Nietverbindungen zwischen einem derartigen Kugelgelenkbolzen 1 und einem blechförmigen Bauteil 2, vorzugsweise einem Blechteil oder geformten Metallblech, welches vorzugsweise Teil einer vorgefertigten Baugruppe ist. Eine derartige vorgefertigte Baugruppe wird beispielsweise in der Serienfertigung von Produkten, beispielsweise von Fahrzeugen verwendet, um die Fertigungstiefe zu reduzieren, die Produktionszeit zu verkürzen und damit eine Kostenersparnis zu erreichen. Das erfindungsgemäße Verfahren ermöglicht die Einbringung des Kugelgelenkbolzens 1 in das blechförmige Bauteil 2 bereits beim Herstellungsprozess, insbesondere Formprozess des blechartigen Bauteils 2, d.h. das Verfahren zur Herstellung der Nietverbindung ist in den Herstellungs- bzw. Formprozess des blechartigen Bauteils zu einer vorgefertigten Baugruppe integriert, wodurch eine enorme Kostenersparnis erreichbar ist.

In das zu verarbeitete eine Ober- und Unterseite 2', 2" aufweisende, blechförmige Bauteil 2 wird zur Montage des Kugelgelenkbolzens 1 eine Vorlochung 2.1 eingebracht, die von einem Anlageabschnitt 2.2 umgeben ist. Der Anlageabschnitt 2.2 ist vorzugsweise eben und/oder zur flächigen Aufnahme der Unterseite des Tellerabschnittes 1.3 ausgebildet. Vorzugweise unterschreitet der Durchmesser der Vorlochung 2.1 den Außendurchmesser ND des Nietbundabschnittes 1.4.

Erfindungsgemäß wird der Kugelgelenkbolzen 1 in einem ersten Schritt mittels eines Fügewerkzeuges 3 derart in die zumindest eine Vorlochung 2.1 im blechartigen Bauteil 2 gefügt, dass der zwischen dem Schaftabschnitt 1.2 und dem Nietbundabschnitt 1.4 vorgesehene ebene Tellerabschnitt 1.3 sich mit seiner Unterseite vorzugsweise flächig auf dem Anlageabschnitt 2.2 des blechförmigen Bauteils 2 abstützt und damit den Blechbolzen mit einer Anlagekraft AF auf die Oberseite 2' des blechförmigen Bauteils drückt. In einem zweiten Schritt wird der zumindest abschnittsweise hohlzylinderförmige Nietbundabschnitt 1.4 mittels eines matrizenartigen Formwerkzeuges in Form eines Nietstempels 4 zur Herstellung der Nietverbindung gesteuert in Richtung des blechförmigen Bauteils 2 verformt, und zwar wird hierzu der Nietstempel 4 entlang der Bolzenlängsachse BLA in Richtung des Nietbundabschnittes 1.4 gesteuert bewegt. Alternativ ist ein gesteuertes Verfahren des blechförmigen Bauteils 2 mit dem eingefügten Kugelgelenkbolzen 1 möglich. Dadurch wird der Nietbundabschnitt 1.4 mit einer Formkraft FF beaufschlagt, die einstellbar ist, und zwar beispielsweise mittels einer Federeinheit 5, 6, insbesondere einer Gasdruckfedereinheit. Die Federeinheit 5, 6 kann mit dem Nietstempel 4 und/oder mit dem Fügewerkzeug 3 in Wirkverbindung stehen.

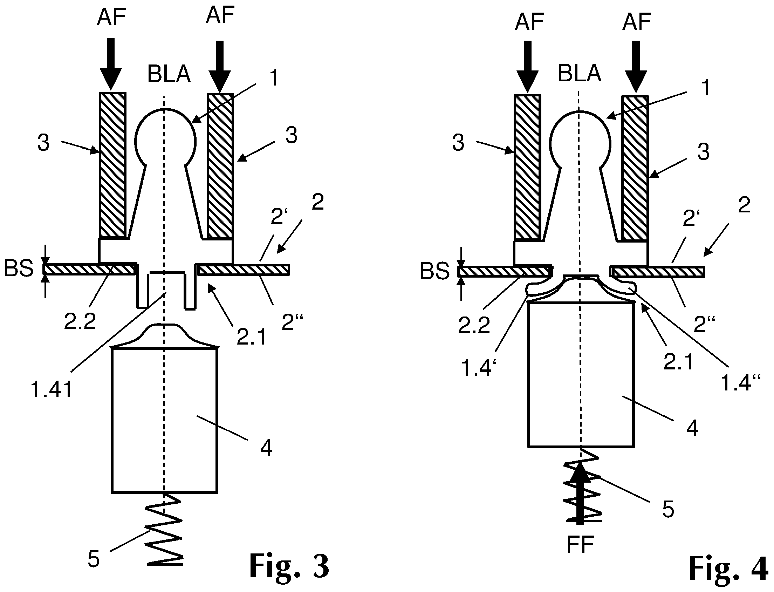

In den Figuren 3 und 4 wird beispielshaft der erste und zweite Schritt des erfindungsgemäßen Verfahrens dargestellt, und zwar das Fügen des Kugelgelenkbolzens 1 in die vorbereitete Vorlochung 2.1 im blechartigen Bauteil 2 entlang der Bolzenlängsachse BLA, welche senkrecht zur Oberseite 2' des blechartigen Bauteils 2 verläuft. Unter Beibehaltung der Anlagekraft AF durch Abstützung des Kugelgelenkbolzens 1 zumindest im Bereich der Oberseite des Tellerabschnittes 1.3, welcher mit seiner Unterseite auf der Oberseite 2' des blechförmigen Bauteils 2, und zwar im Anlageabschnitt 2.2 anliegt, erfolgt dann im zweiten Schritt die Verformung des Nietbundabschnittes 1.4 durch eine gesteuerte Einleitung der Formkraft FF, und zwar mittels der Federeinheit 5 derart dosiert, dass das Entstehen von Mikrorissen R im Bereich des Schaftabschnittes 1.2 des Kugelgelenkbolzens 1 effektiv verhindert werden kann. Insbesondere werden die aufgrund der voneinander abweichenden Kraftlinien der Anlagekraft AF und der Formkraft FF sich ergebenden Spannungen im Schaftabschnitt 1.2 des Kugelgelenkbolzens 1 durch die erfindungsgemäß gesteuerte Einleitung der Verform- und/oder Anlagekräfte AF, FF effektiv reduziert.

Das Fügen des Kugelgelenkbolzens 1 in die Vorlochung 2.1 des blechförmigen Bauteils 2 erfolgt ohne merkliche Verformung des Anlageabschnittes 2.2 des Bauteils 2, d.h. ohne ein Versenken des Tellerabschnittes 1.3 des Kugelgelenkbolzens 1 in den ebenen Anlageabschnitt 2.2 des blechförmigen Bauteils 2.

Alternativ oder zusätzlich kann die Einleitung der Anlagekraft AF über das Fügewerkzeug 3 gesteuert erfolgen, und zwar beispielsweise über eine Federeinheit 6, die in Wirkverbindung mit dem Fügewerkzeugt 3 steht.

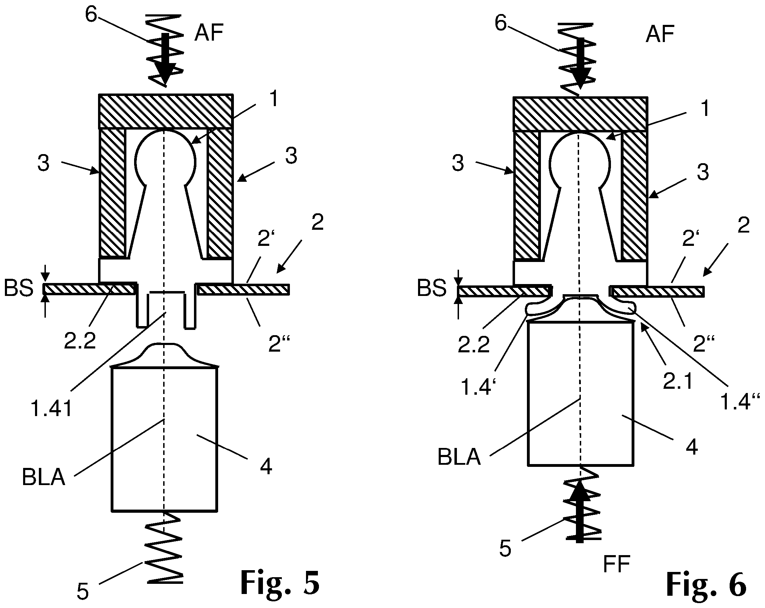

In den Figuren 5 und 6 ist eine alternative Ausführungsvariante des Fügewerkzeuges 3 dargestellt, bei dem eine Einleitung der Anlagekraft AF in den Kugelgelenkbolzen 1 zusätzlich zum Bereich der Oberseite des Tellerabschnittes 1.3 auch im Bereich der Kugelkopfabschnittes 1.1 gesteuert erfolgt. Hierzu ist das Fügewerkzeug 3 zumindest in dem mit dem Kugelgelenkbolzen 1 in Wirkverbindung stehenden Bereich hülsenartig ausgebildet und stützt sich mit dem freien Endbereichen auf der Oberseite des Tellerabschnittes 1.3 sowie mit dem Hülseninnenfläche auf dem Kugelkopfabschnitt 1.1 ab. Über eine Federeinheit 6 erfolgt die gesteuerte Einleitung der Anlagekraft AF über das Fügewerkzeug 3 in den Kugelgelenkbolzen 1 zum Fügen dessen in die Vorlochung 2.1 des blechartigen Bauteils 2. Im vorliegenden Ausführungsbeispiels gemäß der Figuren 5 und 6 sind jeweils zwei Federeinheiten 5, 6 vorgesehen. Es versteht sich, dass alternativ auch nur eine der Federeinheiten 5 oder 6 zum Einsatz kommen kann, um die erfindungsgemäß gesteuerte Einleitung der Anlagekraft AF und/oder Formkraft FF zu erreichen.

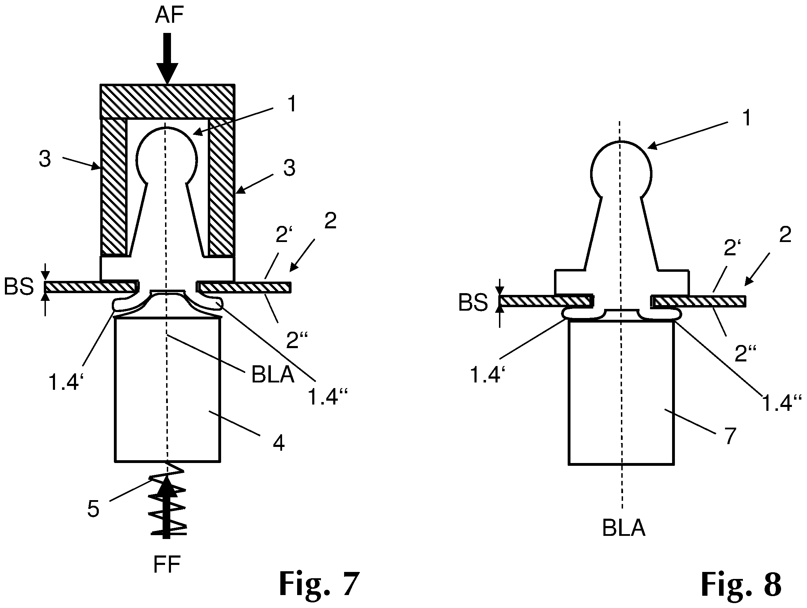

In einer alternativen Ausführungsvariante gemäß Figur 7 ist zwar das Fügewerkzeug 3 ebenfalls hülsenartig ausgebildet, allerdings liegt hier die Hülseninnenfläche nicht auf dem Kugelkopfabschnitt 1.1 auf. Auch erfolgt die Einleitung der Anlagekraft AF ohne eine Federeinheit 6. Die Steuerung der eingeleiteten Kräfte AF, FF erfolgt damit ausschließlich über die mit dem Nietstempel 4 in Wirkverbindung stehende Federeinheit 5.

In einer weiteren, nicht in den Figuren dargestellten Ausführungsvariante kann auch nur im Bereich des Kugelkopfabschnittes 1.1 eine gefederte Unterstützung des Kugelgelenkbolzen 1 durch ein entsprechend zweiteilig ausgebildetes Fügewerkzeug 3 vorliegen, d.h. die Abstützung im Bereich des Oberseite des Tellerabschnittes 1.3 erfolgt ungefedert.

Erfindungsgemäß wird der Nietbundabschnitt 1.4 ohne Rollen verformt, und zwar derart, dass zwischen der Unterseite 2" des blechförmigen Bauteils 2 und den verformten Abschnitten des Nietbundabschnittes 1.4 ein Luftspalt besteht bleibt, zumindest zwischen den freien Endbereichen 1.4', 1.4" des Nietbundabschnittes 1.4 und der Unterseite 2" des blechförmigen Bauteils 2. Hierbei sind die freien Endbereiche 1.4', 1.4" des Nietbundabschnittes 1.4 nach außen orientiert und weisen von der Unterseite 2" des blechförmigen Bauteils 2 weg. Der Nietbundabschnitt 1.4 wird beim erfindungsgemäßen Verfahren um bis zu 90°, vorzugsweise zwischen 80° und 90° bezogen auf die Bolzenlängsachse BLA nach außen verformt und damit der Hohlanteil 1.41 des Nietbundabschnittes 1.4 auf geweitet.

In einer bevorzugten Ausführungsvariante wird der Nietbundabschnitt 1.4 im zweiten Schritt des erfindungsgemäßen Verfahrens zunächst vorgebördelt und anschließend mittels eines geeigneten Verarbeitungswerkzeug 7 der vorgebördelte Nietbundabschnitt 1.4 nachgeschlagen, um ein flächiges Anliegen der vorgebördelten Abschnitte des Nietbundabschnittes 1.4 an der Unterseite 2" des blechförmigen Bauteils 2 zu erreichen.

Figur 8 zeigt einen Schnitt durch eine mittels des erfindungsgemäßen Verfahrens hergestellte vorgefertige Baugruppe umfassend ein blechförmiges Bauteil 2, das mit einem Kugelgelenkbolzen 1 durch Nieten verbunden ist und dessen vorgebördelten Abschnitte des Nietbundabschnittes 1.4 mittels des Verarbeitungswerkzeuges 7 durch Nachschlagen nachbearbeitet sind. Die genannten Umformschritte können mittels einer oder mehrerer Umformstationen realisiert werden.

In einer in den Figuren nicht dargestellten Ausführungsvariante kann vor der Durchführung des erfindungsgemäßen Verfahrens ein zumindest geringfügiges Tüllen des Anlageabschnittes 2.2 um die Vorlochung 2.1 nach oben oder unten bezogen auf die Ober- bzw. Unterseite 2', 2" des blechförmigen Bauteils 2 erfolgen. Die die Vorlochung 2.1 umschließende Tüllung des Anlageabschnittes 2.2 wird nach Durchführung des Füge- und Nietvorganges wieder in den ebenen Zustand überführt, so dass die Unterseite des Tellerabschnittes 1.3 wiederum flächig auf der Oberseite 2' des blechförmigen Bauteil 2 anliegt.

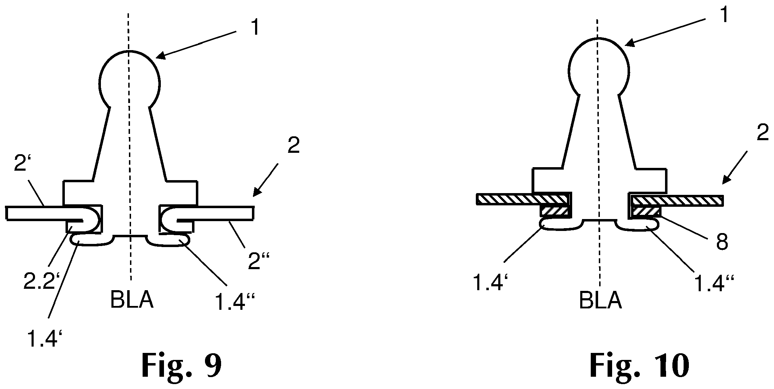

Insbesondere bei dünnen blechförmigen Bauteilen 2 mit beispielsweise einer Blechstärke BS von 0,7 mm bis 1,5 mm erfolgt eine Verstärkung des Anlageabschnittes 2.2 durch Dopplung der Blechstärke BS durch entsprechendes Umbördeln oder Falzen im Anlageabschnitt 2.2 gemäß Figur 9, so dass ein verstärkter Anlageabschnitt 2.2' entsteht. Ein Umbördeln des Anlageabschnittes 2.2 erfolgt beispielsweise bei einer Blechstärke BS kleiner 1,5 mm, und zwar abhängig von den zu übertragenen Kräften.

Alternativ kann ein zusätzliches scheibenartiges Verstärkungselement 8, beispielsweise ein Verstärkungsblech, welches zwischen den verformten Abschnittes des Nietbundabschnittes 1.4 und der Unterseite 2" des blechförmigen Bauteils 2 eingebracht wird, Verwendung finden. Die Stärke des scheibenartigen Verstärkungselementes 8 beträgt vorzugsweise mindestens 1 mm

Die Erfindung wurde voranstehend an Ausführungsbeispielen beschrieben. Es versteht sich, dass zahlreiche Änderungen sowie Abwandlungen möglich sind, ohne dass dadurch die in den Ansprüchen definierte Erfindung verlassen wird.

### Bezugszeichenliste

- 1: Kugelgelenkbolzen
- 1.1: Kugelkopfabschnitt
- 1.2: Schaftabschnitt
- 1.3: Tellerabschnitt
- 1.4: Nietbundabschnitt
- 1.41: Hohlanteil
- 1.42: Vollanteil
- 1.4', 1.4": freie Endbereiche

- 2: blechförmiges Bauteil
- 2': Oberseite
- 2": Unterseite
- 2.1: Vorlochung
- 2.2: Anlageabschnitt
- 2.2': verstärkter Anlageabschnitt

- 3: Fügewerkzeug
- 4: Nietstempel
- 5: Federeinheit
- 6: Federeinheit
- 7: Verarbeitungswerkzeug
- 8: Verstärkungselement

- AF: Anlagekraft
- BLA: Bolzenlängsachse
- BS: Blechstärke
- D: Durchmesser
- D1: erster Durchmesser
- D2: zweiter Durchmesser
- FF: Form kraft
- L: Länge
- ND: Außendurchmesser
- S: Wandstärke
- TS: Tellerstärke
- TD: Tellerdurchmesser
- R: Mikrorisse

## Patentansprüche

1. Verfahren zur Herstellung einer Nietverbindung zwischen einem eine Bolzenlängsachse (BLA) aufweisenden Kugelgelenkbolzen (1) und einem blechförmigen Bauteil (2) mit einem eine Vorlochung (2.1) umgebenden Anlageabschnitt (2.2), bei dem der Kugelgelenkbolzen (1) zumindest einen Kugelkopfabschnitt (1.1), einen daran anschließenden Schaftabschnitt (1.2), einen eine Ober- und Unterseite aufweisenden ebenen Tellerabschnitt (1.3) und einen Nietbundabschnitt (1.4) aufweist, bei dem der Kugelgelenkbolzen (1) mit dem Bauteil (2) durch Verformen des Nietbundabschnittes (1.4) verbunden wird, wobei der Kugelgelenkbolzen (1) in einem ersten Schritt mittels eines Fügewerkzeuges (3) derart in die Vorlochung (2.1) gefügt wird, dass der Tellerabschnitt (1.3) sich mit seiner Unterseite zumindest abschnittsweise vorzugsweise flächig auf dem Anlageabschnitt (2.2) des blechförmigen Bauteils (2) abstützt, und wobei in einem zweiten Schritt der zumindest abschnittsweise hohlzylinderförmige Nietbundabschnitt (1.4) mittels eines matrizenförmigen Formwerkzeuges in Form eines Nietstempels (4) zur Herstellung der Nietverbindung gesteuert in Richtung des blechförmigen Bauteils (2) verformt wird, wobei über den Nietstempel (4) eine Formkraft (FF) in den Nietbundabschnitt (1.4) gesteuert eingeleitet wird **dadurch gekennzeichnet, dass** das Vernieten des Kugelgelenkbolzens (1) mit dem blechförmigen Bauteil (2) in einem Umformwerkzeug zur Herstellung des blechförmigen Bauteils (2) erfolgt und, dass im zweiten Schritt ein Hohlantei (1.41) des Nietbundabschnittes (1.4) zunächst vorgebördelt und anschließend mittels eines geeigneten Verarbeitungswerkzeuges (7) nachgeschlagen wird.

2. Verfahren nach Anspruch 1, **dadurch gekennzeichnet, dass** über das Fügewerkzeug (3) zumindest im Bereich der Oberseite des Tellerabschnittes (1.3) und/oder im Bereich des Kugelkopfabschnittes (1.1) eine Anlagekraft (AF) in den Kugelgelenkbolzen (1) gesteuert eingeleitet wird.

3. Verfahren nach Anspruch 1 oder 2, **dadurch gekennzeichnet, dass** der Betrag der eingeleiteten Formkraft (FF) über eine mit dem Nietstempel (4) in Wirkverbindung stehende Federeinheit, vorzugsweise eine Gasdruckfedereinheit (5) gesteuert wird.

4. Verfahren nach Anspruch 2 oder 3, **dadurch gekennzeichnet, dass** der Betrag der eingeleiteten Anlagekraft (AF) über eine mit dem Fügewerkzeug (3) in Wirkverbindung stehende Federeinheit, vorzugsweise eine Gasdruckfedereinheit (6) eingestellt wird.

5. Verfahren nach einem der Ansprüche 1 bis 4, **dadurch gekennzeichnet, dass** der einen Hohlanteil (1.41) und einen Vollanteil (1.42) aufweisende Nietbundabschnitt (1.4) im Bereich des Hohlanteils (1.41) derart ohne Rollen verformt wird, dass zwischen dem blechförmigen Bauteil (2) und den verformten Abschnitten des Hohlanteils (1.41) des Nietbundabschnittes (1.4) weiterhin ein Luftspalt besteht und/oder die freien Enden (1.4', 1.4") des Nietbundabschnittes (1.4) vom blechförmigen Bauteil (2) weg nach außen orientiert sind.

6. Verfahren nach einem der Ansprüche 1 bis 5, **dadurch gekennzeichnet, dass** der Hohlanteil (1.41) des Nietbundabschnittes (1.4) um bis zu 90°, vorzugsweise zwischen 80° und 90° bezogen auf die Bolzenlängsachse (BLA) nach außen verformt wird.

7. Verfahren nach einem der Ansprüche 1 bis 6, **dadurch gekennzeichnet, dass** die Blechstärke (BS) des blechförmigen Bauteils (2) im Bereich des Anlageabschnittes (2.2) durch Umbördeln oder durch Einbringen eines Verstärkungselementes (8) verstärkt wird.

## Claims

1. A method for producing a riveted connection between a ball joint pin (1) having a pin longitudinal axis (BLA) and a component (2) in the form of a metal sheet having a contact section (2.2) surrounding a preliminary hole (2.1), wherein the ball joint pin (1) has at least a ball head section (1.1), an adjoining shaft section (1.2), a planar plate section (1.3) having a topside and an underside, and a rivet collar section (1.4), wherein the ball joint pin (1) is connected to the component (2) by deformation of the rivet collar section (1.4), wherein in a first step, the ball joint pin (1) is inserted into the preliminary hole (2.1) by means of a joining tool (3) in such a way that the plate section (1.3) is supported with its underside, at least in sections, preferably flatly, on the contact section (2.2) of the metal sheet component (2), and wherein in a second step, the rivet collar section (1.4) which is at least sectionally in the form of a hollow cylinder, is deformed in a controlled manner toward the metal sheet component (2) by means of a matrix-shaped forming tool in the form of a riveting die (4) in order to produce the riveted connection, wherein a shaping force (FF) is introduced into the rivet collar section (1.4) in a controlled manner via the riveting die (4), **characterized in that** the riveting of the ball joint pin (1) to the metal sheet component (2) takes place in a shaping die for producing the metal sheet component (2), and that in the second step, a hollow portion (1.41) of the rivet collar section (1.4) is first pre-flanged and then restruck using a suitable processing tool (7).

2. Method according to claim 1, **characterized in that** a contact force (AF) is introduced in a controlled manner into the ball joint pin (1), at least in the region of the topside of the plate section (1.3) and/or in the region of the ball head section (1.1) via the joining tool (3).

3. Method according to claim 1 or 2, **characterized in that** the magnitude of the introduced shaping force (FF) is controlled via a spring unit, preferably a gas pressure spring unit (5), operatively connected to the riveting die (4).

4. Method according to claim 2 or 3, **characterized in that** the magnitude of the introduced contact force (AF) is set via a spring unit, preferably a gas pressure spring unit (6), operatively connected to the joining tool (3).

5. Method according to any one of claims 1 to 4, **characterized in that** the rivet collar section (1.4) comprising a hollow portion (1.41) and a solid portion (1.42) is deformed in the region of the hollow portion (1.41) without rollers in such a way that an air gap is left between the metal sheet component (2) and the deformed sections of the hollow portion (1.41) of the rivet collar section (1.4) and/or that the free ends (1.4', 1.4") of the rivet collar section (1.4) are oriented outwards away from the metal sheet component (2).

6. Method according to any one of claims 1 to 5, **characterized in that** the hollow portion (1.41) of the rivet collar section (1.4) is deformed outwards by as much as 90°, preferably between 80° and 90°, with respect to the pin longitudinal axis (BLA).

7. Method according to any one of claims 1 to 6, **characterized in that** the sheet thickness (BS) of the metal sheet component (2) is reinforced in the region of the contact section (2.2) by beading or by introducing a reinforcement element (8).

## Revendications

1. Procédé, destiné à créer un assemblage par rivetage entre un boulon d'articulation à rotule (1) comportant un axe longitudinal du boulon (BLA) et un élément structurel (2) en forme de tôle, pourvu d'un segment d'appui (2.2) entourant une pré-perforation (2.1), lors duquel le boulon d'articulation à rotule (1) comporte au moins un tronçon à tête sphérique (1.1), un tronçon de tige (1.2) qui s'y raccorde, un tronçon à disque (1.3) plan, comportant une face supérieure et une face inférieure et un tronçon à collet de rivetage (1.4), lors duquel on assemble le boulon d'articulation à rotule (1) avec l'élément structurel (2) par déformation du tronçon à collet de rivetage (1.4), dans lequel dans une première étape, le boulon d'articulation à rotule (1) est assemblé au moyen d'un outil d'assemblage (3) dans la pré-perforation (2.1), de telle sorte que le tronçon à disque (1.3) s'appuie par sa face inférieure au moins par endroits à pleine surface sur le segment d'appui (2.2) de l'élément structurel (2) en forme de tôle et dans lequel dans une deuxième étape, le tronçon à collet de rivetage (1.4) au moins par endroits en forme de cylindre creux est déformé de manière contrôlée, en direction de l'élément structurel (2) en forme de tôle, au moyen d'un outil de façonnage en forme de matrice, pour adopter la forme d'un poinçon de rivetage (4), pour créer l'assemblage par rivetage, par l'intermédiaire du poinçon de rivetage (4), une force de façonnage (FF) étant introduite de manière contrôlée dans le tronçon à collet de rivetage (1.4), **caractérisé en ce que** le rivetage du boulon d'articulation à rotule (1) avec l'élément structurel (2) en forme de tôle s'effectue dans un outil de façonnage pour la création de l'élément structurel (2) en forme de tôle, et **en ce que** dans la deuxième étape, on sertit d'abord préalablement une partie creuse (1.41) du tronçon à collet de rivetage (1.4) et on la soumet ensuite à une percussion ultérieure au moyen d'un outil d'usinage (7) adapté.

2. Procédé selon la revendication 1, **caractérisé en ce que** par l'intermédiaire de l'outil d'assemblage (3) on introduit de manière contrôlée, au moins dans la zone de la face supérieure du tronçon à disque (1.3) et/ou dans la zone de la tête sphérique (1.1) une force d'appui (AF) dans le boulon d'articulation à rotule (1).

3. Procédé selon la revendication 1 ou 2, **caractérisé en ce que** la valeur de la force de façonnage (FF) introduite est contrôlée par l'intermédiaire d'une unité à ressort, de préférence d'une unité à ressort pneumatique (5) qui est en interaction avec le poinçon de rivetage (4).

4. Procédé selon la revendication 2 ou 3, **caractérisé en ce que** la valeur de la force d'appui (AF) introduite est réglée par l'intermédiaire d'une unité à ressort, de préférence d'une unité à ressort pneumatique (6) qui est en interaction avec l'outil d'assemblage (3).

5. Procédé selon l'une quelconque des revendications 1 à 4, **caractérisé en ce qu'**on déforme sans rouleau le tronçon à collet de rivetage (1.4) comportant une partie creuse (1.41) et une partie pleine (1.42) dans la zone de la partie creuse (1.41), de telle sorte qu'entre l'élément structurel (2) en forme de tôle et les segments déformés de la partie creuse (1.41) du tronçon à collet de rivetage (1.4), il subsiste par ailleurs un entrefer et/ou que les extrémités libres (1.4', 1.4") du tronçon à collet de rivetage (1.4) soient orientées vers l'extérieur, en s'éloignant de l'élément structurel (2) en forme de tôle.

6. Procédé selon l'une quelconque des revendications 1 à 5, **caractérisé en ce qu'**on déforme vers l'extérieur la partie creuse (1.41) du tronçon à collet de rivetage (1.4) de la valeur de jusqu'à 90 °, de préférence d'une valeur comprise entre 80 ° et 90 °, en rapport à l'axe longitudinal du boulon (BLA).

7. Procédé selon l'une quelconque des revendications 1 à 6, **caractérisé en ce qu'**on renforce dans la zone du segment d'appui (2.2) l'épaisseur de tôle (BS) de l'élément structurel (2) en forme de tôle par bordage ou par introduction d'un élément de renfort (8).
